# FASCICULE DE BREVET EUROPEEN

(11) **EP 2 740 609 B1**
(45) Date de publication et mention de la délivrance du brevet: **27.03.2019**
(21) Numéro de dépôt: 14156643.0
(22) Date de dépôt: 04.06.2012
(51) Int. Cl.: B44B 5/00, C03B 11/10, C03B 23/00, C03B 9/32, C03B 9/195, C03B 9/193

(54) **Procédé de fabrication d'un article en verre creux**
Herstellungsverfahren eines Artikels aus Hohlglas
Method for manufacturing a hollow glass item

(30) Priorité: 06.06.2011 FR 1154891
(43) Date de publication de la demande: 11.06.2014
(62) Demande divisionnaire de: 12170711.1
(73) Titulaire: Pochet du Courval, 75010 Paris (FR)
(72) Inventeur: Froissart, Pascal, 80430 NEUVILLE COPPEGUEULE (FR); Baliteau, Sébastien, 80220 BOUTTENCOURT (FR)
(74) Mandataire: Derambure Conseil

(56) Documents cités:
- EP-A2- 1 656 859
- JP-A- 2003 095 671
- US-A1- 2003 026 924

## Description

La présente invention concerne un procédé de fabrication d'un article en verre creux.

Les articles en verre creux, comme par exemple les flacons ou les pots, sont obtenus en déposant au moins une goutte de verre fondu, également appelée paraison, dans une empreinte d'un moule ébaucheur. Une ébauche est préformée dans ce moule ébaucheur au moyen d'un poinçon ou par soufflage d'un gaz dans l'empreinte dudit moule.

Ensuite, l'ébauche ainsi réalisée est démoulée et transférée par exemple par un bras manipulateur, dans un moule finisseur pour former définitivement l'article en verre par soufflage d'un gaz.

Afin de personnaliser ce type d'articles en verre, il est connu de réaliser sur la face externe un ou plusieurs motifs en relief et/ou en creux. Pour cela l'empreinte du moule finisseur comporte un ou plusieurs motifs en relief et/ou en creux qui, lors de l'étape de formation définitive de l'article dans le moule finisseur, viennent s'incruster sur la face externe de cet article en verre du fait de la malléabilité du verre.

Les documents EP1656859, JP2003 095671 et US 2003/026924 montrent des exemples d'articles en verre ou en poterie avec motifs en creux ou en relief.

Mais, certains utilisateurs d'articles en verre, notamment dans le domaine de la parfumerie ou de la cosmétique, cherchent à personnaliser les articles en verre qu'ils utilisent, en réalisant des décors en relief et/ou en creux à l'intérieur, rappelant ou suggérant la marque et/ou le produit contenu dans les articles. Le ou les décors à l'intérieur peuvent être indépendants de la forme de l'article et ces motifs ou décors peuvent être par exemple des effets optiques particuliers.

L'invention a pour but de proposer un procédé de fabrication permettant de réaliser ce type d'intervention à l'intérieur d'articles en verre.

L'invention a donc pour objet un procédé selon la revendication 1.

Selon des variantes de réalisation, on pourra mettre en oeuvre les caractéristiques de l'une et/ou l'autre des revendications dépendantes.

Le dispositif peut comprendre une ou plusieurs des caractéristiques suivantes, prises isolément ou suivant toutes les combinaisons techniquement possibles :
- ledit au moins un moule est un moule ébaucheur,
- ledit au moins un moule est un moule finisseur,
- le poinçon est formé par une pièce creuse et les moyens d'actionnement comprennent un piston déplaçable à l'intérieur du poinçon dans l'axe de l'article par un moyen de commande entre une première position dans laquelle ladite au moins une portion de marquage est en position escamotée et une
   marquage est en position escamotée et une seconde position dans laquelle ladite au moins une portion de marquage est en position en saillie,

- le piston comporte, à son extrémité libre, une partie tronconique munie d'au moins une rainure coopérant avec un tenon solidaire de la portion de marquage et de forme complémentaire à ladite rainure, et
- la rainure présente une pente dirigée vers le centre du fond de l'article.

Il est décrit un premier procédé de fabrication d'un article en verre creux au moyen d'un tel dispositif, caractérisé en ce qu'il consiste en les étapes suivantes :
- on dépose dans une empreinte d'un moule ébaucheur au moins une goutte de verre fondu,
- on introduit dans l'empreinte du moule ébaucheur un premier poinçon pour former une ébauche,
- après avoir retiré le premier poinçon, on injecte dans le moule ébaucheur un gaz dans l'ébauche pour former l'article,
- on introduit dans l'article un second poinçon comportant au moins une portion de marquage munie d'au moins un motif en relief et/ou en creux et déplaçable radialement,
- on déplace radialement ladite au moins une portion de marquage entre une position escamotée et une position en saillie appliquée contre la face interne de la paroi latérale de l'article pour imprimer sur cette face interne ledit au moins un motif,
- on ramène ladite au moins une portion de marquage dans sa position escamotée et on retire le second poinçon.

Il est décrit un deuxième procédé de fabrication d'un article en verre creux au moyen d'un tel dispositif, caractérisé en ce qu'il consiste en les étapes suivantes :
- on dépose dans une empreinte d'un moule ébaucheur au moins une goutte de verre fondu,
- on introduit dans l'empreinte du moule ébaucheur un poinçon pour former l'article, ledit poinçon comportant au moins une portion de marquage munie d'au moins un motif en relief et/ou en creux et déplaçable radialement,
- on déplace radialement ladite au moins une portion de marquage entre une position escamotée et une position en saillie appliquée contre la face interne de la paroi latérale de l'article pour imprimer sur cette face interne ledit au moins un motif,
- on ramène ladite au moins une portion de marquage dans sa position escamotée et on retire le poinçon.

Il est décrit un troisième procédé de fabrication d'un article en verre creux au moyen d'un tel dispositif, caractérisé en ce qu'il consiste en les étapes suivantes :
- on dépose dans une empreinte d'un moule ébaucheur au moins une goutte de verre fondu,
- on introduit dans l'empreinte du moule ébaucheur un poinçon pour former une ébauche,
- après avoir retiré le poinçon, on transfert l'ébauche dans un moule finisseur et on injecte un gaz dans l'ébauche pour former l'article,
- on introduit dans l'article un poinçon comportant au moins une portion de marquage munie d'au moins un motif en relief et/ou en creux et déplaçable radialement,
- on déplace radialement ladite au moins une portion de marquage entre une position escamotée et une position en saillie appliquée contre la face interne de la paroi latérale de l'article pour imprimer sur cette face interne ledit au moins un motif, et
- on ramène ladite au moins une portion de marquage dans sa position escamotée et on retire le poinçon.

Il est décrit un article en verre creux définissant un contenant comportant une ouverture, un fond opposé à ladite ouverture et au moins une paroi latérale délimitée par une face interne et une face externe, caractérisé en ce que la face interne de ladite au moins une paroi latérale comporte au moins un motif en relief et/ou en creux réalisé au moyen d'un dispositif de fabrication tel que précédemment mentionné.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective et en coupe verticale d'un article en verre comportant intérieurement un motif en relief et/ou en creux et obtenu au moyen d'un dispositif de fabrication, conforme à l'invention,
- la Fig. 2 est une vue schématique en élévation et en coupe verticale du dispositif de fabrication, conforme à l'invention,
- la Fig. 3 est une vue schématique en perspective et en coupe transversale d'un poinçon du dispositif de fabrication, conforme à l'invention, et
- les Figs. 4 et 5 sont des vues schématiques en élévation et en coupe verticale montrant le déplacement d'une portion de marquage du poinçon du dispositif de fabrication, conforme à l'invention.

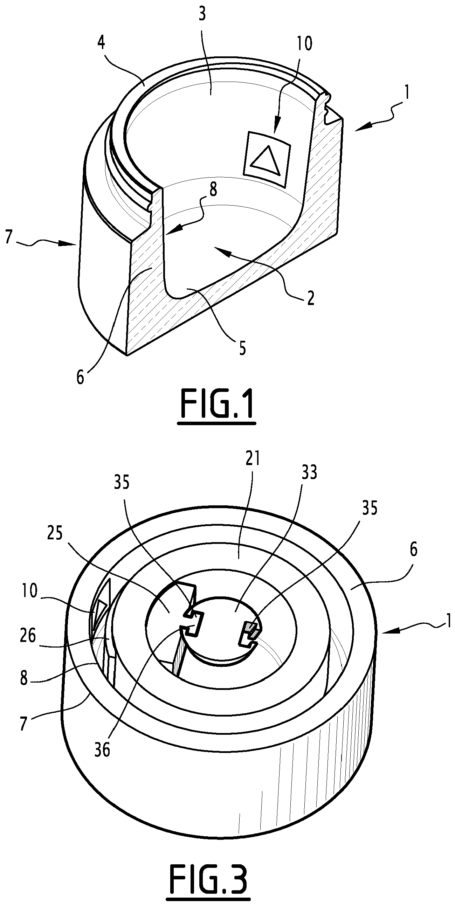

Sur la Fig. 1, on a représenté schématiquement et en coupe verticale un article en verre creux désigné dans son ensemble par la référence 1.

L'article 1 définit un contenant 2 comprenant une ouverture 3 délimitée par un col 4 et un fond 5 opposé à ladite ouverture 3. Le contenant de l'article 1 comprend également au moins une paroi latérale 6 délimitée par une face externe 7 et une face interne 8.

Dans l'exemple de réalisation représenté sur les figures, l'article en verre 1 présente une forme générale circulaire, cet article en verre 1 peut avoir une toute autre forme, comme par exemple une forme générale parallélépipédique.

Ainsi que montré à la Fig. 1, la face interne 8 de la paroi latérale 6 comporte au moins un motif 10 en relief et/ou en creux réalisé par le dispositif de fabrication, conforme à l'invention. La face interne 8 de la paroi latérale 6 peut comporter plusieurs motifs 10 en relief et/ou en creux de formes diverses.

D'une manière générale, les articles 1 en verre de ce type, comme par exemple les flacons ou les pots, sont obtenus en déposant au moins une goutte de verre fondu, également appelée paraison, dans une empreinte d'un moule ébaucheur. Une ébauche est préformée dans ce moule ébaucheur au moyen d'un poinçon ou par soufflage d'un gaz dans l'empreinte dudit moule.

Ensuite, l'ébauche ainsi réalisée est démoulée et transférée par exemple par un bras manipulateur, non représenté, dans un moule finisseur pour former définitivement l'article en verre par soufflage d'un gaz.

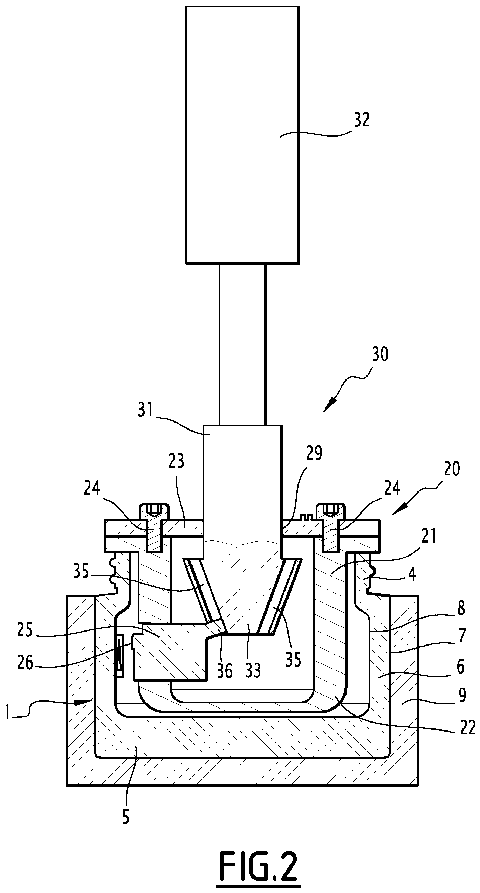

Dans l'exemple de réalisation représenté sur les Figs. 2 à 5, l'article en verre 1 a été préalablement formé dans un moule ébaucheur, non représenté,pour obtenir une ébauche et cette ébauche a été transférée dans un moule finisseur 9, le verre étant à l'état malléable.

Dans ce moule finisseur, un gaz est injecté à l'intérieur de l'ébauche pour former l'article 1, ainsi que montré à la Fig. 2.

Le dispositif de fabrication comprend un poinçon désigné dans son ensemble par la référence 20 qui peut être utilisé dans un moule ébaucheur ou un moule finisseur.

Le poinçon 20 est déplaçable entre une position passive en dehors du moule 9 ou une position active à l'intérieur de ce moule 9.

Comme cela apparaît à la Fig. 2, le poinçon 20 est formé par une pièce creuse 21 de section circulaire et fermée à sa partie inférieure par un fond 22. La partie supérieure de la pièce 22 comporte une ouverture fermée par un couvercle 23 fixé sur la pièce 21 par des organes appropriés, comme par exemple des organes de vissage 24.

La pièce 21 du poinçon 20 comporte au moins une portion de marquage 25 munie, sur sa face externe située à l'extérieur de la pièce 21, d'au moins un motif 26 en relief et/ou en creux.

Dans l'exemple de réalisation représenté sur les figures, le poinçon 20 comporte une seule portion de marquage 25.

Selon une variante, ce poinçon 20 peut comporter plusieurs portions de marquage 25 réparties à la périphérie de la pièce 21.

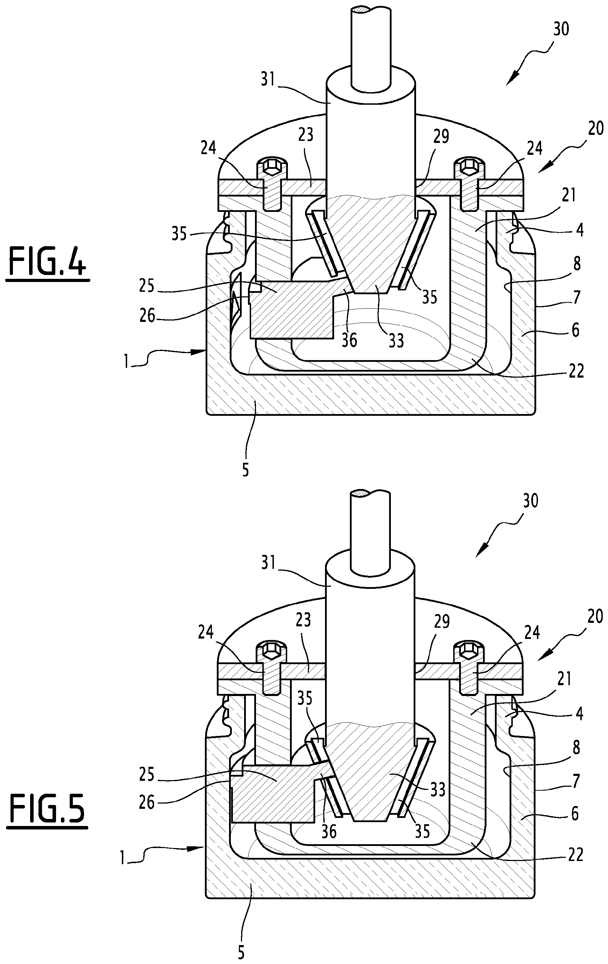

La portion de marquage 25 est déplaçable radialement par des moyens d'actionnement 30, dans la position active du poinçon 20, entre une position escamotée représentée sur les Figs. 2 et 4 et une position en saillie représentée à la Fig. 5 appliquée contre la face interne 8 de la paroi latérale 6 pour imprimer sur cette face interne 8 ledit au moins un motif 26 afin de réaliser le motif 10 en relief et/ou en creux.

Ainsi que montré à la Fig. 2, les moyens 30 d'actionnement comprennent un piston 31 déplaçable à l'intérieur de la pièce 21 du poinçon 20. Ce piston 31 traverse le couvercle 23 par un orifice central 29.

Le piston 31 est déplaçable dans l'axe de l'article 1 par un moyen de commande 32 entre une première position dans laquelle la portion de marquage 25 est en position escamotée (Figs. 2 et 4) et une seconde position dans laquelle ladite portion de marquage 25 est en position en saillie (Fig. 5).

Le moyen de commande 32 est formé par un vérin hydraulique ou pneumatique ou par tout autre organe approprié de type connu.

Le piston 31 comporte à son extrémité libre, une partie tronconique 33 dont la petite base est située à l'extrémité libre du piston 31.

Comme montré plus particulièrement sur les Figs. 3 et 4, la partie tronconique 33 comporte au moins une rainure 35 présentant une pente dirigée vers le centre du fond 5 de l'article 1.

Dans l'exemple de réalisation représenté sur les figures, la partie tronconique 33 comporte deux rainures 35 opposées dont une seule est associée à une portion de marquage 25. Pour cela, la portion de marquage 25 comporte un tenon 36 de forme complémentaire à ladite rainure 35.

Le marquage de la face interne 8 dans un moule finisseur, non représenté, après avoir formé l'article 1 est réalisé de la manière suivante.

Lorsque l'organe de commande 32 est actionné, le piston 31 coulisse dans l'ouverture 29 ménagée dans le couvercle 23 et se déplace dans l'axe de l'article 1 en direction du fond 22 de la pièce 21, c'est-à-dire en direction du fond 5 de l'article 1. La portion de marquage 25 étant maintenue dans la pièce 21, le tenon 36 glisse dans la rainure 25 de la partie tronconique 33 du piston 31 ce qui provoque, du fait de la pente de cette rainure 35, le déplacement radial de la portion de marquage 25 en direction de la face interne 8 de la paroi latérale 6 de l'article 1.

La force ainsi exercée permet d'imprimer le motif 26 sur la face interne 8 afin de réaliser le motif 10 en relief et/ou en creux, le verre étant à l'état malléable.

Dans le cas où l'on souhaite réaliser le marquage de la face interne 8 dans un moule ébaucheur, on procède de la façon suivante.

Tout d'abord, on dépose dans une empreinte d'un moule ébaucheur, non représenté, au moins une goutte de verre fondu et on introduit dans l'empreinte de ce, moule ébaucheur un premier poinçon pour former une ébauche. Après avoir retiré ce premier poinçon, on injecte dans le moule ébaucheur un gaz dans l'ébauche pour former l'article 1.

Ensuite, on introduit dans l'article 1 le poinçon 20 et on déplace radialement la portion de marquage 25 au moyen du piston 31 et de l'organe de commande 32.

Cette portion de marquage 25 est ainsi déplacée radialement entre une position escamotée et une position en saillie appliquée contre la face interne 8 de la paroi latérale 6 de l'article 1 pour imprimer sur cette face interne au moins un motif 10 en relief et/ou en creux. Ensuite, on ramène la portion de marquage 25 dans sa position escamotée au moyen du piston 31 et de l'organe de commande 32 et on retire le poinçon 20.

Selon une variante, l'article 1 peut être transféré dans un moule finisseur, non représenté, et un gaz est injecté dans l'article 1 pour augmenter son volume.

Selon une variante, après avoir déposé dans une empreinte d'un moule ébaucheur au moins une goutte de verre fondu, on introduit directement dans l'empreinte de ce moule ébaucheur le poinçon 20 pour former l'article 1 et également pour réaliser le motif 10 en relief et/ou en creux par déplacement radial de la portion de marquage 25, de manière identique aux précédents modes de réalisation.

Selon une variante, l'article 1 peut ensuite être transféré dans un moule finisseur, non représenté, et un gaz est injecté dans l'article 1 pour augmenter son volume.

La pression apposée par la portion de marquage 25 permet une pénétration du motif 26 dans le verre encore à l'état malléable de l'article 1, sans altérer la géométrie générale de cet article 1. La température du verre doit être suffisamment élevée pour permettre une déformation de la face interne 8 de la paroi latérale 6.

Le marquage de la face interne 8 de la paroi latérale 6 de l'article 1 peut intervenir avant, après ou conjointement à une opération de soufflage destinée à former l'article ou le maintenir en pression interne.

La température du ou des motifs 26 formés sur la portion de marquage 25 peut être régulée afin d'assurer une qualité de rendu et afin d'éliminer les effets de collage ou de déformation. Ce ou ces motifs 26 peuvent être réalisés en acier ou en fonte. Ces matériaux peuvent être revêtus d'une couche de métal projeté à chaud pour en améliorer les performances.

Le ou les motifs ainsi formés sur la face interne 8 de la paroi latérale 6 de l'article en verre1 peuvent ensuite être décorés partiellement ou totalement.

Enfin, la face inférieure de la partie tronconique 33, c'est-à-dire sa petite base, peut comporter aussi au moins un motif en relief et/ou en creux non représenté, permettant d'imprimer ledit au moins un motif sur la face interne du fond 5 de l'article 1 dans la position en saillie de ladite au moins une portion de marquage 25.

### Clauses

1.- Dispositif de fabrication d'un article en verre (1) creux définissant un contenant (2) comportant une ouverture (3), un fond (5) opposé à ladite ouverture (3) et au moins une paroi latérale (6) délimitée par une face externe (7) et une face interne (8), ledit dispositif comprenant au moins un moule (9) et un poinçon (20) déplaçable entre une position passive en dehors dudit au moins un moule (9) et une position active à l'intérieur dudit au moins un moule (9), caractérisé en ce que le poinçon (20) comporte au moins une portion de marquage (25) munie d'au moins un motif (26) en relief et/ou en creux et déplaçable radialement par des moyens d'actionnement (30), dans la position active du poinçon (20), entre une position escamotée et une position en saillie appliquée contre la face interne (8) de la paroi latérale (6) pour imprimer sur cette face interne ledit au moins un motif (26) en relief et/ou en creux.
2.-Dispositif selon la clause 1, caractérisé en ce que ledit au moins un moule (9) est un moule ébaucheur.
3.- Dispositif selon la clause 1, caractérisé en ce que ledit au moins un moule (9) est un moule finisseur.
4.- Dispositif selon l'une quelconque des clauses 1 à 3, caractérisé en ce que le poinçon (20) est formé par une pièce creuse (21) et les moyens d'actionnement (30) comprennent un piston (31) déplaçable à l'intérieur du poinçon (20) dans l'axe de l'article (1) par un moyen de commande (32) entre une première position dans laquelle ladite au moins une portion de marquage (25) est en position escamotée et une seconde position dans laquelle ladite au moins une portion de marquage (25) est en position en saillie.
5.- Dispositif selon la clause 4, caractérisé en ce que le piston (31) comporte, à son extrémité libre, une partie tronconique (33) munie d'au moins une rainure (35) coopérant avec un tenon (36) solidaire de la portion de marquage (25) et de forme complémentaire à ladite rainure (35).
6.- Dispositif selon la clause 5, caractérisé en ce que la rainure (35) présente une pente dirigée vers le centre du fond (5) de l'article (1).
7.- Procédé de fabrication d'un article en verre (1) creux au moyen d'un dispositif selon l'une quelconque des clauses précédentes, caractérisé en ce qu'il consiste en les étapes suivantes :
   - on dépose dans une empreinte d'un moule ébaucheur au moins une goutte de verre fondu,
   - on introduit dans l'empreinte du moule ébaucheur un premier poinçon pour former une ébauche,
   - après avoir retiré le premier poinçon, on injecte dans le moule ébaucheur un gaz dans l'ébauche pour former l'article (1),
   - on introduit dans l'ébauche un second poinçon (20) comportant au moins une portion de marquage (25) munie d'au moins un motif (26) en relief et/ou en creux et déplaçable radialement.
   - on déplace radialement ladite au moins une portion de marquage (25) entre une position escamotée et une position en saillie appliquée contre la face interne (8) de la paroi latérale (6) de l'article (1), pour imprimer sur cette face interne (8) ledit au moins un motif (26),
   - on ramène ladite au moins une portion de marquage (25) dans sa position escamotée et on retire le second poinçon (20).
8.- Procédé de fabrication d'un articule en verre (1) creux au moyen d'un dispositif selon l'une quelconque des clauses 1 à 6, caractérisé en ce qu'il consiste en les étapes suivantes :
   - on dépose dans une empreinte d'un moule ébaucheur au moins une goutte de verre fondu,
   - on introduit dans l'empreinte du moule ébaucheur un poinçon (20) pour former l'article (1), ledit poinçon comportant au moins une portion de marquage (25) munie d'au moins un motif (26) en relief et/ou en creux et déplaçable radialement,
   - on déplace radialement ladite au moins une portion de marquage (25) entre une position escamotée et une position en saillie appliquée contre la face interne (8) de la paroi latérale (6) de l'article pour imprimer sur cette face interne (8) ledit au moins un motif (26),
   - on ramène ladite au moins une portion de marquage (25) dans sa position escamotée et on retire le poinçon (20).
9.- Procédé de fabrication d'un article en verre (1) creux au moyen d'un dispositif selon l'une quelconque des clauses 1 à 6, caractérisé en ce qu'il consiste en les étapes suivantes :
   - on dépose dans une empreinte d'un moule ébaucheur au moins une goutte de verre fondu,
   - on introduit dans l'empreinte du moule ébaucheur un poinçon pour former une ébauche,
   - après avoir retiré le poinçon, on transfère l'ébauche dans un moule finisseur et on injecte un gaz dans l'ébauche pour former l'article en verre (1),
   - on introduit dans l'article (1) un poinçon (20) comportant au moins une portion de marquage (25) munie d'au moins un motif (26) en relief et/ou en creux et déplaçable radialement,
   - on déplace radialement ladite au moins une portion de marquage (25) entre une position escamotée et une position en saillie appliquée contre la face interne (8) de la paroi latérale (6) de l'article (1) pour imprimer sur cette face interne ledit au moins un motif (26), et
   - on ramène ladite au moins une portion de marquage (25) dans sa position escamotée et on retire le poinçon (20).

## Revendications

1. Procédé de fabrication d'un article en verre (1) creux définissant un contenant (2) comportant une ouverture (3), un fond (5) opposé à ladite ouverture (3) et au moins une paroi latérale (6) délimitée par une face externe (7) et une face interne (8), le verre étant à l'état malléable, ledit procédé comprenant :
- on fournit au moins un moule (9), et un poinçon (20) déplaçable entre une position passive en dehors dudit au moins un moule (9) à une position active à l'intérieur dudit au moins un moule (9), le poinçon (20) comportant au moins une portion de marquage (25) munie d'au moins un motif (26) en relief et/ou en creux,
- dans la position active du poinçon (20) à l'intérieur dudit au moins un moule (9), des moyens d'actionnement (30) déplacent radialement ledit au moins un motif (26) en relief et/ou en creux d'une position escamotée à une position en saillie appliquée contre la face interne (8) de la paroi latérale (6) pour imprimer sur cette face interne ledit au moins un motif (26) en relief et/ou en creux, puis déplacent radialement ledit au moins un motif (26) en relief et/ou en creux de la position en saillie à la position escamotée, et
- on déplace le poinçon (20) de la position active à l'intérieur dudit au moins un moule (20) à une position passive en dehors dudit au moins un moule (9).

2. Procédé selon la revendication 1, **caractérisé en ce que** ledit au moins un moule (9) est un moule ébaucheur.

3. Procédé selon la revendication 2, dans lequel l'ébauche ainsi réalisée est démoulée et transférée, notamment par un bras manipulateur, dans un moule finisseur pour former définitivement l'article en verre.

4. Procédé selon la revendication 3, dans lequel on forme définitivement l'article en verre par soufflage d'un gaz.

5. Procédé selon la revendication 1, **caractérisé en ce que** ledit au moins un moule (9) est un moule finisseur.

6. Procédé selon la revendication 5, dans lequel un gaz est injecté à l'intérieur de l'ébauche dans le moule finisseur.

7. Procédé selon la revendication 5 ou 6, dans lequel l'article a été préalablement formé dans un moule ébaucheur.

8. Procédé selon l'une quelconque des revendications 1 à 7, dans lequel le poinçon (20) est formé par une pièce creuse (21) et les moyens d'actionnement (30) comprennent un piston (31) qu'un moyen de commande (32) déplace à l'intérieur du poinçon (20) dans l'axe de l'article (1) entre une première position dans laquelle ladite au moins une portion de marquage (25) est dans la position escamotée et une seconde position dans laquelle ladite au moins une portion de marquage (25) est dans la position en saillie, et en particulier le piston (31) comporte, à son extrémité libre, une partie tronconique (33) munie d'au moins une rainure (35), en particulier présente une pente dirigée vers le centre du fond (5) de l'article (1), coopérant avec un tenon (36) solidaire de la portion de marquage (25) et de forme complémentaire à ladite rainure (35).

9. Procédé selon l'une quelconque des revendications 1 à 8, dans lequel ledit au moins un moule inclut un moule ébaucheur, et le poinçon est un second poinçon, et le procédé est **caractérisé en ce qu'** il comprend en outre, les étapes suivantes :
- on dépose dans une empreinte du moule ébaucheur au moins une goutte de verre fondu,
- on introduit dans l'empreinte du moule ébaucheur un premier poinçon pour former une ébauche,
- après avoir retiré le premier poinçon, on injecte dans le moule ébaucheur un gaz dans l'ébauche pour former l'article (1), et
- on introduit dans l'ébauche le second poinçon (20) dans la position active avant de déplacer radialement ladite au moins une portion de marquage (25) entre la position escamotée et la position en saillie .

10. Procédé selon l'une quelconque des revendications 1 à 8, dans lequel ledit au moins un moule inclut un moule ébaucheur, et le procédé est **caractérisé en ce qu'** il comprend en outre, les étapes suivantes :
- on dépose dans une empreinte du moule ébaucheur au moins une goutte de verre fondu, et
- on introduit dans l'empreinte du moule ébaucheur le poinçon (20) pour former l'article (1) dans la position active avant de déplacer radialement ladite au moins une portion de marquage (25) entre la position escamotée et la position en saillie .

11. Procédé selon l'une quelconque des revendications 1 à 8, dans lequel ledit au moins un moule inclut un moule ébaucheur et un moule finisseur, et le poinçon est un second poinçon et, le procédé est **caractérisé en ce qu'** il comprend en outre, les étapes suivantes :
- on dépose dans une empreinte du moule ébaucheur au moins une goutte de verre fondu,
- on introduit dans l'empreinte du moule ébaucheur un premier poinçon pour former une ébauche,
- après avoir retiré le premier poinçon, on transfère l'ébauche dans le moule finisseur et on injecte un gaz dans l'ébauche pour former l'article en verre (1), et
- on introduit dans l'article (1) le second poinçon (20) dans la position active avant de déplacer radialement ladite au moins une portion de marquage (25) entre la position escamotée et la position en saillie.

12. Procédé selon l'une quelconque des revendications 1 à 11, dans lequel, après avoir déplacé le poinçon (20) dans la position passive, on forme définitivement l'article en verre.

13. Procédé selon l'une quelconque des revendications 1 à 12, comprenant en outre l'une et/ou l'autre des caractéristiques suivantes :
- la température du ou des motifs (26) formés sur la portion de marquage (25) est régulée ;
- le ou les motifs (26) formés sur la portion de marquage (25) est (sont) réalisé(s) en acier ou en fonte;
- le ou les motifs (26) formés sur la portion de marquage (25) est (sont) réalisé(s) en acier ou en fonte revêtus d'une couche de métal projeté à chaud ;
- le ou les motifs formés sur la face interne (8) de la paroi latérale (6) de l'article en verre (1) sont ensuite décorés partiellement ou totalement ;
- la face inférieure de la partie tronconique (33) comporte au moins un motif en relief et/ou en creux permettant d'imprimer ledit au moins un motif sur la face interne du fond (5) de l'article (1) dans la position en saillie de ladite au moins une portion de marquage (25).

## Patentansprüche

1. Verfahren zum Herstellen eines hohlen Artikels aus Glas (1), welcher einen Behälter (2) definiert, welcher eine Öffnung (3), einen Boden (5) gegenüber der Öffnung (3) und wenigstens eine laterale Wand (6) umfasst, welche durch eine äußere Fläche (7) und eine innere Fläche (8) begrenzt ist, wobei das Glas in einem formbaren Zustand ist, das Verfahren umfassend:
- Bereitstellen wenigstens einer Form (9) und eines Stempels (20), welcher zwischen einer passiven Position außerhalb der wenigstens einen Form (9) und einer aktiven Position im Inneren der wenigstens einen Form (9) verlagerbar ist, wobei der Stempel (20) wenigstens einen Markierungsabschnitt (25) umfasst, welcher mit wenigstens einem Motiv (26) in Relief und/oder in Vertiefung versehen ist,
- wobei in der aktiven Position des Stempels (20) im Inneren der wenigstens einen Form (9) Betätigungsmittel (30) das wenigstens eine Motiv (26) in Relief und/oder in Vertiefung von einer verborgenen Position in eine vorstehende Position gegen die innere Fläche (8) der lateralen Wand (6) zum Prägen des wenigstens einen Motivs (26) in Relief und/oder in Vertiefung an dieser inneren Fläche verlagern, und anschließend das wenigstens eine Motiv (26) in Relief und/oder in Vertiefung radial von der vorstehenden Position in die verborgene Position verlagern, und
- Verlagern des Stempels (20) von der aktiven Position im Inneren der wenigstens einen Form (20) zu einer passiven Position außerhalb der wenigstens einen Form (9).

2. Verfahren nach Anspruch 1, **dadurch gekennzeichnet, dass** die wenigstens eine Form (9) eine Roh-Form ist.

3. Verfahren nach Anspruch 2, wobei der derart hergestellte Rohling entformt und, insbesondere durch einen Handhabungsarm, in eine End-Form transferiert wird, um den Artikel aus Glas endgültig zu bilden.

4. Verfahren nach Anspruch 3, wobei der Artikel aus Glas durch Einblasen eines Gases endgültig gebildet wird.

5. Verfahren nach Anspruch 1, **dadurch gekennzeichnet, dass** die wenigstens eine Form (9) eine End-Form ist.

6. Verfahren nach Anspruch 5, wobei ein Gas in den Innenraum des Rohlings in der End-Form injiziert wird.

7. Verfahren nach Anspruch 5 oder 6, wobei der Artikel in einer Roh-Form zuvor gebildet worden ist.

8. Verfahren nach einem der Ansprüche 1 bis 7, wobei der Stempel (20) durch ein hohles Stück (21) gebildet ist und die Betätigungsmittel (30) einen Kolben (31) umfassen, welchen ein Anweisungsmittel (32) im Inneren des Stempels (20) in der Achse des Artikels (1) zwischen einer ersten Position, in welcher der wenigstens eine Markierabschnitt (25) in der verborgenen Position ist, und einer zweiten Position verlagert, in welcher der wenigstens eine Markierabschnitt (25) in der vorstehenden Position ist, und wobei der Kolben (31) insbesondere an seinem freien Ende einen kegelförmigen Abschnitt (33) umfasst, welcher mit wenigstens einer Nut (35) versehen ist, insbesondere eine Neigung aufweist, welche zu der Mitte des Bodens (5) des Artikels (1) gerichtet ist, mit einem Zapfen (36) zusammenwirkend, welcher mit dem Markierungsabschnitt (25) verbunden und von komplementärer Form zu der Nut (35) ist.

9. Verfahren nach einem der Ansprüche 1 bis 8, wobei die wenigstens eine Form eine Roh-Form einschließt und der Stempel ein zweiter Stempel ist, und das Verfahren **dadurch gekennzeichnet ist, dass** es ferner die folgenden Schritte umfasst:
- Anordnen von wenigstens einem Tropfen von geschmolzenem Glas in einem Abdruck der Roh-Form,
- Einführen eines ersten Stempels in den Abdruck der Roh-Form, um einen Rohling zu bilden,
- nachdem der erste Stempel zurückgezogen worden ist, Eingeben eines Gases in den Rohling in der Roh-Form, um den Artikel (1) zu bilden, und
- Einführen des zweiten Stempels (20) in der aktiven Position in den Rohling, vor einem radialen Verlagern des wenigstens einen Markierungsabschnitts (25) zwischen der verborgenen Position und der vorstehenden Position.

10. Verfahren nach einem der Ansprüche 1 bis 8, wobei die wenigstens eine Form eine Roh-Form einschließt und das Verfahren **dadurch gekennzeichnet ist, dass** es ferner die folgenden Schritte umfasst:
- Anordnen wenigstens eines Tropfens von geschmolzenem Glas in einem Abdruck der Roh-Form, und
- Einführen des Stempels (20) in den Abdruck der Roh-Form, um den Artikel (1) in der aktiven Position zu bilden, bevor der wenigstens eine Markierungsabschnitt (25) zwischen der verborgenen Position und der vorstehenden Position verlagert wird.

11. Verfahren nach einem der Ansprüche 1 bis 8, wobei die wenigstens eine Form eine Roh-Form und eine End-Form umfasst und der Stempel ein zweiter Stempel ist und das Verfahren **dadurch gekennzeichnet ist, dass** es ferner die folgenden Schritte umfasst:
- Anordnen wenigstens eines Tropfens von geschmolzenem Glas in einem Abdruck der Roh-Form,
- Einführen eines ersten Stempels in den Abdruck der Roh-Form, um einen Rohling zu bilden,
- nachdem der erste Stempel zurückgezogen worden ist, Transferieren des Rohlings in die End-Form und Injizieren eines Gases in den Rohling, um den Artikel aus Glas (1) zu bilden, und
- Einführen des zweiten Stempels (20) in den Artikel (1) in der aktiven Position vor einem radialen Verlagern des wenigstens einen Markierungsabschnitts (25) zwischen der verborgenen Position und der vorstehenden Position.

12. Verfahren nach einem der Ansprüche 1 bis 11, wobei nachdem der Stempel (20) in die passive Position verlagert worden ist, der Artikel aus Glas endgültig gebildet wird.

13. Verfahren nach einem der Ansprüche 1 bis 12, ferner umfassend ein und/oder ein anderes der folgenden Merkmale:
- die Temperatur des oder der Motive (26), welche an dem Markierungsabschnitt (25) gebildet sind, wird geregelt;
- das oder die Motive (26), welche an dem Markierungsabschnitt (25) gebildet ist, ist (sind) aus Stahl oder aus Gusseinsen hergestellt;
- das oder die Motive (26), welche an dem Markierungsabschnitt (25) gebildet ist, ist (sind) aus Stahl oder aus Gusseinsen hergestellt, welcher/welches mit einer heiß aufgetragenen Metallschicht überzogen ist;
- das oder die Motive, welche an der inneren Fläche (8) der lateralen Wand (6) des Artikels aus Glas (1) gebildet sind, werden anschließend teilweise oder vollständig dekoriert;
- die untere Fläche des kegelförmigen Abschnitts (33) umfasst wenigstens ein Motiv in Relief und/oder in Vertiefung, wodurch ein Prägen des wenigstens einen Motivs auf die innere Fläche des Bodens (5) des Artikels (1) in der vorstehenden Position des wenigstens einen Markierungsabschnitts (25) erlaubt wird.

## Claims

1. Method for manufacturing a hollow glass article (1) defining a container (2) comprising an opening (3), a bottom (5) opposite said opening (3) and at least one side wall (6) delimited by an external face (7) and an internal face (8), the glass being in a malleable state, said method comprising:
- providing at least one mould (9) and a punch (20) displaceable between a passive position outside said at least one mould (9) and an active position inside said at least one mould (9), the punch (20) comprising at least one marking portion (25) provided with at least one raised and/or recessed pattern (26),
- in the active position of the punch (20) on the inside of said at least one mould (9), actuating means (30) radially displace said at least one raised and/or recessed pattern (26) from a retracted position to a projected position applied against the internal face (8) of the side wall (6) to imprint onto said internal face said at least one raised and/or recessed pattern (26), then radially displace said at least one raised and/or recessed pattern (26) from the projected position to the retracted position and
- the punch (20) is displaced from the active position to the interior of said at least one mould (20) to a passive position outside of said at least one mould (9).

2. Method according to claim 1, **characterised in that** said at least one mould (9) is a preforming mould.

3. Method according to claim 2, wherein the preform formed in this way is unmoulded and transferred, in particular by a manipulator arm, into a finishing mould to definitively form the glass article.

4. Method according to claim 3, wherein a glass article is formed definitively by blow moulding.

5. Method according to claim 1, **characterised in that** said at least one mould (9) is a finishing mould.

6. Method according to claim 5, wherein a gas is injected inside the preform in the finishing mould.

7. Method according to claim 5 or 6, wherein the article has been previously shaped in a preforming mould.

8. Method according to any of claims 1 to 7, wherein the punch (20) is formed by a hollow part (21) and the actuation means (30) comprise a piston (31) displaceable inside the punch (20) along the axis of the article (1) by a controller (32) between a first position in which said at least one marking portion (25) is in the retracted position and a second position in which said at least one marking portion (25) is in the projected position, and in particular the piston (31) comprises, at its free end, a frustoconical portion (33) provided with at least one groove (35), in particular sloped towards the centre of the bottom (5) of the article (1), cooperating with a tenon (36) integral with the marking portion (25) and with a shape that is complementary to said groove (35).

9. Method according to any of claims 1 to 8, wherein said at least one mould comprises a preforming mould, and the punch is a second punch and the method is **characterised in that** it also comprises the following steps:
- depositing at least one drop of molten glass into an imprint of the preforming mould,
- introducing a first punch to form a preform into the imprint of the preforming mould,
- injecting a gas into the preform in order to form the article (1) after having withdrawn the first punch, and
- introducing into the preform the second punch (20) in the active position prior to radially displacing said at least one marking portion (25) between the retracted position and the projected position.

10. Method according to any of claims 1 to 8, wherein said at least one mould comprises a preforming mould and the method is **characterised in that** it also comprises the following steps:
- depositing at least one drop of molten glass into an imprint of the preforming mould, and
- introducing the punch (20) to form the article (1) into the imprint of the preforming mould in the active position prior to radially displacing said at least one marking portion (25) between the retracted position and the projected position.

11. Method according to any of claims 1 to 8, wherein said at least one mould comprises a preforming mould and a finishing mould, and the punch is a second punch and the method is **characterised in that** it also comprises the following steps:
- depositing at least one drop of molten glass into an imprint of the preforming mould,
- a first punch for forming a preform is introduced into the imprint of the preforming mould,
- after having retracted the first punch, the preform is transferred into the finishing mould and gas is injected into the preform to form the glass article (1) and
- the second punch (20) is introduced in the article (1) in the active position prior to radially displacing said at least one marking portion (25) between the retracted position and the projected position.

12. Method according to any of claims 1 to 11, wherein, after having displaced the punch (20) into the passive position, the glass article is shaped definitively.

13. Method according to any of claims 1 to 12, also comprising one and/or other of the following features:
- the temperature of the pattern or patterns (26) formed on the marking portion (25) is controlled;
- the pattern or patterns (26) formed on the marking portion (25) is/are made of steel or cast iron;
- the pattern or patterns (26) formed on the marking portion (25) is/are made of steel or cast iron coated with a layer of thermally sprayed metal;
- the pattern or patterns formed on the internal face (8) of the side wall (6) of the glass article (1) are then decorated partially or fully;
- the lower face of the frustoconical part (33) has at least one raised and/or recessed pattern making it possible to imprint said at least one pattern onto the internal face of the bottom (5) of the article (1) in the projected position of said at least one marking portion (25).
